# EUROPÄISCHE PATENTSCHRIFT

(11) **EP 2 724 754 B1**
(45) Veröffentlichungstag und Bekanntmachung des Hinweises auf die Patenterteilung: **30.11.2016**
(21) Anmeldenummer: 12190439.5
(22) Anmeldetag: 29.10.2012
(51) Int. Cl.: A62C 35/58, A62C 99/00, G01M 3/32

(54) **Verfahren und Vorrichtung zum Bestimmen und/oder Überwachen der Luftdichtigkeit eines umschlossenen Raumes**
Method and device for determining and/or monitoring the air permeability of an enclosed space
Procédé et dispositif de détermination et/ou de surveillance de l'étanchéité à l'air d'une pièce fermée

(43) Veröffentlichungstag der Anmeldung: 30.04.2014
(60) Teilanmeldung: 16194961.5
(73) Patentinhaber: Amrona AG, 6304 Zug (CH)
(72) Erfinder: Eberlein, Anselm, 30419 Hannover (DE)
(74) Vertreter: Rupprecht, Kay

(56) Entgegenhaltungen:
- EP-A1- 1 913 978
- EP-A1- 1 930 048
- EP-A1- 2 462 994
- DE-A1-102005 023 101

## Beschreibung

Die Erfindung betrifft ein Verfahren zum Bestimmen und/oder Überwachen der Luftdichtigkeit eines umschlossenen und mit einer Sauerstoffreduzierungsanlage ausgerüsteten Raumes. Insbesondere betrifft die Erfindung ein Verfahren, um für inertisierbare und insbesondere dauerinertisierbare Räume, bei welchen ein Inertisierungsverfahren eingesetzt wird, den entsprechenden volumenbezogenen Leckagestrom möglichst genau bestimmen bzw. überwachen zu können.

Die Erfindung betrifft ferner eine Sauerstoffreduzierungsanlage, bei welcher in der Raumatmosphäre eines umschlossenen Raumes ein vorgebbarer und im Vergleich zur normalen Umgebungsluft reduzierter Sauerstoffgehalt eingestellt und gehalten wird, wobei die Sauerstoffreduzierungsanlage ausgebildet ist, das erfindungsgemäße Verfahren zum Bestimmen und/oder Überwachen der Luftdichtigkeit des umschlossenen Raumes durchzuführen.

Inertisierungsverfahren zum Höhentraining, zur Lagerung von Lebensmitteln oder zur Minderung des Risikos eines Brandes in einem umschlossenen Raum sind aus der Inertisierungstechnik allgemein bekannt. Üblicherweise wird bei diesen Inertisierungsverfahren durch Einleiten eines sauerstoffverdrängenden Gases aus einer Inertgasquelle die Raumluftatmosphäre des umschlossenen Raumes auf ein unter der Sauerstoffkonzentration der Umgebungsluftatmosphäre liegendes Inertisierungsniveau abgesenkt und dort gehalten.

Die bei diesem Verfahren resultierende Schutzwirkung beruht auf dem Prinzip der Sauerstoffverdrängung. Normale Umgebungsluft besteht bekanntlich zu etwa 21 Vol.-% aus Sauerstoff, zu 78 Vol.-% aus Stickstoff und zu 1 Vol.-% aus sonstigen Gasen. Um das Risiko einer Brandentstehung zu mindern bzw. um ein in einem umschlossenen Raum bereits ausgebrochenes Feuer zu löschen oder um die Haltbarkeit von eingelagerten Lebensmitteln zu verlängern, wird durch Einleiten von beispielsweise reinem Stickstoff als Inertgas die Stickstoffkonzentration in dem betreffenden Raum erhöht und somit der Sauerstoffanteil verringert. Es ist bekannt, dass eine deutliche Schutzwirkung bzw. eine Brandverhütungswirkung einsetzt, wenn der Sauerstoffanteil unter etwa 15 Vol.-% absinkt. Abhängig von den in dem betreffenden Raum vorhandenen brennbaren Materialien (Brandlast) kann ferner ein weiteres Absenken des Sauerstoffanteils auf beispielsweise 12 Vol.-% erforderlich sein. Bei dieser Sauerstoffkonzentration können sich die meisten brennbaren Materialien nicht mehr entzünden bzw. brennen.

Eine Sauerstoffreduzierungsanlage ist üblicherweise so projektiert, dass ein oder mehrere definierte Absenkungsniveaus in der Raumatmosphäre eines umschlossenen Raumes innerhalb einer vorgegebenen Zeit eingestellt und über eine festgelegte Zeitdauer oder kontinuierlich gehalten werden können. So ist es beispielsweise notwendig, dass in einem Brandfall der Sauerstoffgehalt in der Raumatmosphäre rasch derart reduziert wird, dass das Feuer gelöscht (erstickt) und zumindest innerhalb einer sogenannten Rückzündungsphase ein Wiederentzünden von Materialien in dem Raum wirksam verhindert wird.

Die vorstehend genannte Rückzündungsphase bezeichnet den Zeitabschnitt nach der sogenannten "Brandbekämpfungsphase'', wobei in diesem Zeitabschnitt die Sauerstoffkonzentration in dem umschlossenen Raum einen bestimmten Wert, den sogenannten "Rückzündungsverhinderungswert'', nicht überschreiten darf, um ein erneutes Entzünden der im Schutzbereich vorhandenen Materialien zu vermeiden. Das Rückzündungsverhinderungsniveau ist dabei eine Sauerstoffkonzentration, die von der Brandlast des Raumes abhängt und anhand von Versuchen bestimmt wird.

Solche Inertisierungsanlagen werden z.B. in EP 2 462 994 A1 und DE 10 2005 023101 offenbart. Um den Brandschutz bzw. die lange Haltbarkeit der gelagerten Lebensmittel gewährleisten zu können, muss die Sauerstoffreduzierungsanlage entsprechend projektiert sein, d.h. sie muss in der Lage sein, für einen längeren Zeitraum einen bestimmten Volumenstrom an sauerstoffverdrängenden Gasen bereitzustellen. Die im Einzelfall pro Zeiteinheit von der Sauerstoffreduzierungsanlage bereitzustellende Menge an sauerstoffverdrängenden Gasen hängt insbesondere von dem Raumvolumen und der Luftdichtigkeit des umschlossenen Raumes ab. So muss die Sauerstoffreduzierungsanlage eine größere Kapazität haben, wenn es sich bei dem umschlossenen Raum um beispielsweise eine Lagerhalle mit einem relativ großen Raumvolumen handelt, da - im Vergleich zu einem relativ kleinen Schutzbereich - pro Zeiteinheit eine größere Menge an sauerstoffverdrängenden Gasen in die Raumatmosphäre der Lagerhalle einzuleiten ist, damit innerhalb einer vorgegebenen Zeit ein Absenkungsniveau eingestellt werden kann. Andererseits erhöht sich auch die von der Sauerstoffreduzierungsanlage pro Zeiteinheit zur Verfügung zu stellende Menge an sauerstoffverdrängenden Gasen je geringer die Luftdichtigkeit bzw. je höher die Luftwechselrate des umschlossenen Raumes ist.

Der Einfluss des Raumvolumens stellt bei der Projektierung einer Sauerstoffreduzierungsanlage üblicherweise keine Schwierigkeiten dar. Dies ist dadurch begründet, dass sich das maximal zu berücksichtigende Raumvolumen eines mit einer Sauerstoffreduzierungsanlage ausgerüsteten oder auszurüstenden Raumes relativ einfach bestimmen lässt und dieses Raumvolumen im Laufe der Zeit zumindest nicht zunehmen kann. Anders sieht es allerdings im Hinblick auf die Luftdichtigkeit des Raumes aus. Üblicherweise wird als Maß für die Luftdichtigkeit eines Raumes die Luftwechselrate herangezogen, welche über den sogenannten n50-Wert ausgedrückt wird.

Die Luftwechselrate n50 ergibt sich aus dem Luftvolumenstrom, der sich pro Stunde einstellt, wenn eine Druckdifferenz von 50 Pa aufrechterhalten wird, dividiert durch das Gebäudevolumen. Demnach weist der umschlossene Raum einen umso höheren Luftdichtigkeitswert auf, je kleiner die Luftwechselrate ist.

Üblicherweise wird der n50-Wert als Maß für die Luftdichtigkeit eines Raumes mit einem Differenzdruck-Messverfahren (Blower-Door-Verfahren) gemessen. Insbesondere bei größeren Gebäuden bzw. Räumen ist das Durchführen einer Differenzdruck-Messreihe zum Ermitteln der Luftwechselrate n50 allerdings häufig nur mit gewissen Schwierigkeiten und mit hohem technischen Aufwand möglich. Selbst wenn mit Hilfe einer Differenzdruck-Messung der n50-Wertes des betroffenen Raumes bestimmt wurde, ist die Frage nicht auszuschließen, ob sich der Zustand des umschlossenen Raumes im Laufe der Zeit, insbesondere im Hinblick auf die Luftwechselrate ändert. So ist es beispielsweise denkbar, dass ursprünglich abgedichtete Öffnungen im Raum undicht werden. Auch hat die Bestückung des umschlossenen Raumes mit Gegenständen bzw. Waren (insbesondere im Falle einer Lagerhalle) einen Einfluss auf die mit der Differenzdruck-Messung erfasste Luftwechselrate.

Die Tatsache, dass sich die Luftdichtigkeit eines umschlossenen Raumes im Laufe der Zeit nicht nur ändern, sondern auch insbesondere verschlechtern kann, stellt ein Problem bei der Projektierung von Sauerstoffreduzierungsanlagen dar. Insbesondere ist es bislang nicht oder nur mit hohem Aufwand möglich, bei einem bereits mit einer Sauerstoffreduzierungsanlage ausgerüsteten Raum nachträglich dessen Luftdichtigkeit zu bestimmen, um ggf. die Kapazität der Sauerstoffreduzierungsanlage anzupassen, d.h. die pro Zeiteinheit von der Sauerstoffreduzierungsanlage bereitstellbare Menge an sauerstoffverdrängenden Gasen beispielsweise zu erhöhen, wenn die Luftdichtigkeit des umschlossenen Raumes abgenommen hat, damit ein Brandschutz bzw. eine lange Haltbarkeit gewährleistet ist.

Eine fortlaufende Überprüfung der Luftdichtigkeit eines mit einer Sauerstoffreduzierungsanlage ausgerüsteten Raumes ist auch insofern erwünscht, inwiefern auch Rückschlüsse auf neu entstandene Leckagen zu benachbarten Räumen getroffen werden können. Hierbei besteht das Risiko, dass über solche neu entstandene Leckagen ggf. sauerstoffverdrängende Gase in die benachbarten Räume gelangen können, was unter Umständen eine Gesundheitsgefährdung von sich in den benachbarten Räumen aufhaltenden Personen nach sich ziehen kann.

Auf der Grundlage dieser Problemstellung liegt der vorliegenden Erfindung die Aufgabe zugrunde, ein Verfahren anzugeben, mit welchem möglichst genau und ohne größeren Aufwand die Luftdichtigkeit eines umschlossenen Raumes bestimmt bzw. ein Anfangs ermittelter Luftdichtigkeitswert zu einem späteren Zeitpunkt kontrolliert/verifiziert werden kann, wobei sich dieser Raum insbesondere für den Einsatz der vorstehend beschriebenen Inertisierungstechnik eignen soll.

Insbesondere soll ein Verfahren und eine Anlage angegeben werden, mit welchem bzw. mit welcher in einer effektiven aber dennoch leicht zu realisierenden Weise bei Bedarf jederzeit die aktuelle Luftdichtigkeit des umschlossenen Raumes bestimmt/kontrolliert werden kann, ohne dass hierfür eine aufwändige Messreihe aufgenommen werden muss, wie es beispielsweise bei dem aus dem Stand der Technik bekannten Blower-Door-Messverfahrens zur Bestimmung des n50-Wertes der Fall ist.

Diese Aufgabe wird im Hinblick auf das Verfahren durch den Gegenstand des unabhängigen Patentanspruches 1 und im Hinblick auf die Anlage durch den Gegenstand des nebengeordneten Patentanspruches 14 gelöst. Vorteilhafte Weiterbildungen im Hinblick auf das erfindungsgemäße Verfahren sind in den abhängigen Patentansprüchen 1 bis 13 angegeben. Demgemäß wird insbesondere ein Verfahren zum Bestimmen und/oder Überwachen der Luftdichtigkeit eines umschlossenen und mit einer Sauerstoffreduzierungsanlage ausgerüsteten Raumes angegeben, wobei in der Raumatmosphäre des umschlossenen Raumes durch Einleiten eines sauerstoffverdrängenden Gases mindestens ein vorzugsweise vorab festlegbarer und im Vergleich zur normalen Umgebungsluft reduzierter Sauerstoffgehalt einstellbar und haltbar ist. Die dem umschlossenen Raum zugeordnete Sauerstoffreduzierungsanlage weist ein Kompressorsystem zum Komprimieren eines zumindest Stickstoff und Sauerstoff enthaltenen Anfangs-Gasgemisches und ein dem Kompressorsystem nachgeschaltetes Gasseparationssystem auf, in welchem zumindest ein Teil des in dem Anfangs-Gasgemisch enthaltenen Sauerstoffs abgetrennt wird, um am Ausgang des Gasseparationssystems ein mit Stickstoff angereichertes Gas bereitzustellen. Dieses mit Stickstoff angereicherte Gas wird zum Einstellen und/oder Halten eines reduzierten Sauerstoffgehaltes dem umschlossenen Raum zugeführt. Währenddessen wird ein in dem umschlossenen Raum herrschender oder sich in dem umschlossenen Raum einstellender Druck bezogen auf den Umgebungsluftdruck ermittelt. Dieser ermittelte Differenzdruck wird als Maß für die Luftdichtigkeit des umschlossenen Raumes herangezogen. Während dieses Ermittelns wird vorteilhafterweise kein vermeidbarer Einfluss auf variable Raumöffnungen wie beispielsweise Fenster, Türen etc. genommen, um das Messergebnis nicht zu verfälschen.

Die mit der erfindungsgemäßen Lösung erzielbaren Vorteile liegen auf der Hand: Dadurch, dass zum Bestimmen bzw. Überwachen der Luftdichtigkeit des umschlossenen Raumes anlagentechnisch auf die Komponenten der ohnehin vorhandenen Sauerstoffreduzierungsanlage zurückgegriffen werden kann, ist in einer besonders leicht zu realisierenden, aber dennoch effektiven Weise zu jedem beliebigen Zeitpunkt die Luftdichtigkeit des Raumes bestimmbar und/oder kontrollierbar. Hierzu ist es lediglich erforderlich, mit Hilfe des Kompressor- und Gasseparationssystems der Sauerstoffreduzierungsanlage ein mit Stickstoff angereichertes Gas bereitzustellen, welches vorzugsweise kontinuierlich und mit konstantem Volumenstrom in den umschlossenen Raum eingeleitet wird, um in dem umschlossenen Raum verglichen mit dem Außendruck (Umgebungsdruck) eine Druckdifferenz aufzubauen. Das Kompressorsystem wird vorzugsweise so geregelt, dass am Ausgang des Gasseparationssystems ein zeitlich konstanter Volumenstrom von mit Stickstoff angereichertem Gas vorliegt, so dass sich bei Einleiten des bereitgestellten Gases in dem umschlossenen Raum eine bestimmte Druckdifferenz bezogen auf den Außendruck aufbaut. Diese Druckdifferenz zusammen mit dem in den umschlossenen Raum eingeleiteten Volumenstrom liefert ein Maß für die Dichtigkeit des umschlossenen Raumes. Es handelt sich hierbei somit um eine einfach realisierbare Variante des als "Blower-Door-Test" bekannten Differenzdruckverfahrens.

An dieser Stelle ist hervorzuheben, dass mit dem erfindungsgemäßen Verfahren die Luftdichtigkeit des umschlossenen Raumes ohne besonderen Aufwand bestimmt werden kann. Das Verfahren eignet sich somit insbesondere zur Überprüfung, ob in der Raumhülle gegebenenfalls bislang nicht berücksichtigte Leckagen im Laufe der Zeit neu entstanden sind, was einen Einfluss auf die Luftwechselrate des Raumes hat. So ist es beispielsweise denkbar, dass wöchentlich die Luftdichtigkeit des Raumes mit Hilfe des erfindungsgemäßen Verfahrens gemessen und mit einem vorab festgelegten oder bestimmten Referenzwert verglichen wird. Stellt sich dabei heraus, dass zusätzliche Leckagen in der Hülle des umschlossenen Raumes aufgetreten sind, müssen entsprechende Maßnahmen unternommen werden. Dies könnte beispielsweise darin bestehen, dass die Raumhülle auf Leckagen zu inspizieren ist, um diese entsprechend abzudichten. Zusätzlich oder alternativ hierzu ist es allerdings auch denkbar, dass die Sauerstoffreduzierungsanlage an die höhere Luftwechselrate des Schutzraumes angepasst wird. Dies könnte insbesondere die von der Sauerstoffreduzierungsanlage im Brandfall kurzfristig bereitzustellende Menge an Inertgas betreffen.

In einer bevorzugten Weiterbildung des erfindungsgemäßen Verfahrens ist vorgesehen, dass beim Bestimmen bzw. Überwachen der Luftdichtigkeit des umschlossenen Raumes nicht nur das am Ausgang des Gasseparationssystems bereitgestellte Gas, sondern auch zusätzlich hierzu Frischluft in den umschlossenen Raum eingeleitet wird, um den insgesamt in den umschlossenen Raum eingeleiteten Volumenstrom zu erhöhen. Auf diese Weise ist erreichbar, dass sich in dem umschlossenen Raum ein höherer bestimmter Differenzdruck im Vergleich zu dem Umgebungsluftdruck (Außenatmosphäre) aufbaut. Mit dieser Variante ist - im Vergleich zu einem Fall, wenn nur das am Ausgang des Gasseparationssystems bereitgestellte Gas eingeleitet wird - die Luftdichtigkeit des Raumes durch den höheren Differenzdruck genauer erfassbar. Damit können kleinere Änderungen der Luftdichtigkeit sicher erkannt werden. Hierbei bietet es sich an, ein zur Sauerstoffreduzierungsanlage gehörendes Ventilatorsystem und/oder das zur Sauerstoffreduzierungsanlage gehörende Kompressorsystem heranzuziehen, um die zusätzliche Frischluft in den umschlossenen Raum einzuleiten, so dass auch bei dieser Weiterbildung anlagentechnisch auf bereits existierende Komponenten der Sauerstoffreduzierungsanlage zurückgegriffen werden kann.

Da eine verlässliche Aussage über die Luftdichtigkeit des umschlossenen Raumes nur dann getroffen werden kann, wenn zumindest nach einer gewissen Anlaufzeit die pro Zeiteinheit dem umschlossenen Raum zugeführte Menge an Gas konstant ist, ist es bevorzugt, dass das am Ausgang des Gasseparationssystems bereitgestellte und mit Stickstoff angereicherte Gas und gegebenenfalls die zusätzlich bereitgestellte Frischluft mit einem konstanten Volumenstrom in den umschlossenen Raum vorzugsweise kontinuierlich eingeleitet wird.

Bei praktischen Versuchen hat sich gezeigt, dass es im Hinblick auf die Messzeit und Messgenauigkeit von Vorteil ist, wenn der relative Volumenstrom Qrel, d.h. der Volumenstrom im Verhältnis zum Raumvolumen und zur Luftwechselrate n50 (Qrel = Volumenstrom/(Raumvolumen x Luftwechselrate)) einen Wert annimmt, der zwischen 0,2 bis 0,9 liegt, damit eine relative Änderung des n50-Wertes von 50% bis 3% erkannt werden kann. Bei einem Raumvolumen von 600.000 m³ und einem n50-Wert von 0,015/h sollte somit der Volumenstrom einen vorzugsweise konstanten Wert in einem Bereich von 1.800 m³/h bis 8.100 m³/h annehmen. Noch bevorzugter liegt der relative Volumenstrom Qrel zwischen 0,34 bis 0,67 was bei einem Raumvolumen von 600.000 m³ und einem n50-Wert von 0,015/h einem Fluss von 3.000 m³/h bis 6.000 m³/h und einer detektierbaren Änderung des n50-Wertes zwischen 17% und 5% entspricht. Diese Volumenströme sind mit den Komponenten einer üblichen Sauerstoffreduzierungsanlage problemlos realisierbar.

Vorzugsweise erfolgt bei dem erfindungsgemäßen Verfahren die Differenzdruckmessung zeitgleich mit oder zumindest teilweise zeitlich überlappend mit der Einleitung des Gases in den umschlossenen Raum. Zur Auswertung sind vorzugsweise Differenzdruckwerte heranzuziehen, die aufgenommen wurden, wenn sich ein konstanter Volumenstrom Q eingestellt hat. Um Messfehler zu reduzieren, ist es noch bevorzugter, dass zur Auswertung nur solche Differenzdruckwerte herangezogen werden, die aufgenommen wurden, nachdem sich der Differenzdruck in dem umschlossenen Raum eingestellt hat und über eine bestimmte Zeitperiode nicht mehr ändert bzw. einen vorgebbaren Toleranzbereich nicht über- bzw. unterschreitet.

Im Einzelnen erfolgt bei dem erfindungsgemäßen Verfahren die Auswertung dadurch, dass mindestens ein ermittelter Differenzdruckwert mit einem entsprechenden Referenzwert verglichen wird. Unter dem hierin verwendeten Begriff Differenzdruck" bzw. "Differenzdruckwert" ist ein durch Einleiten von Gas in den umschlossenen Raum einstellender Druck bezogen auf den Umgebungsluftdruck zu verstehen.

Der bei dem Vergleich heranzuziehende Druckwert entspricht in vorteilhafter Weise zahlenmäßig einen Differenzdruck, der sich - bezogen auf den Umgebungsluftdruck - bei kontinuierlicher Zufuhr von Gas mit konstantem Volumenstrom Q in dem umschlossenen Raum einstellt oder eingestellt hat. Hierzu bietet es sich an, dass der zur Auswertung heranzuziehende Druckwert mit Hilfe eines Druckmesssystems, insbesondere Differenzdruckmesssystems erfasst wird.

Zur Vereinfachung der Auswertung und zur Erhöhung der Messgenauigkeit ist es von Vorteil, wenn der ermittelte Druckwert, der mit dem entsprechenden Referenzwert zu vergleichen ist, zu einem Zeitpunkt erfasst wird, wenn bei kontinuierlicher Zufuhr von Gas mit konstantem Volumenstrom Q die zeitliche Änderung des Druckes in dem umschlossenen Raum einen vorab festgelegten oder festlegbaren oberen Schwellwert nicht überschreitet und einen vorab festgelegten oder festlegbaren unteren Schwellwert nicht unterschreitet.

Alternativ oder zusätzlich hierzu ist es denkbar, dass der zur Auswertung heranzuziehende ermittelte Druckwert einem Mittelwert einer Vielzahl von mit Hilfe eines Druckmesssystems, insbesondere Differenzdruckmesssystems erfassten Drücke entspricht.

Da auch die Temperatur der Raumluftatmosphäre einen Einfluss auf den im Inneren des Raumes herrschenden bzw. sich einstellenden Druck hat, ist es im Hinblick auf eine Reduzierung von Messfehlern weiter von Vorteil, wenn vorzugsweise kontinuierlich oder zu vorgegebenen Zeiten und/oder Ereignissen auch die Temperatur in dem umschlossenen Raum erfasst und insbesondere gemessen wird. Der erfasste Temperaturwert wird vorzugsweise bei der Ermittlung des mindestens einen Druckwertes, der zur Auswertung herangezogen wird, berücksichtigt.

Schließlich ist in einer vorteilhaften Realisierung des erfindungsgemäßen Verfahrens vorgesehen, dass automatisch und vorzugsweise wahlweise automatisch eine Warnmeldung ausgegeben wird, wenn sich bei der Auswertung zeigt, dass der ermittelte Druckwert von dem Referenzwert um mehr als eine vorgebbare Toleranz abweicht.

Unter dem hierin verwendeten Begriff "Referenzwert" ist ein bestimmter, vorab festgelegter Druckwert zu verstehen, der sich bei einem bestimmten Volumenstrom Q in dem umschlossenen Raum einstellt. Dieser Referenzwert kann beispielsweise dann ermittelt werden, wenn die Sauerstoffreduzierungsanlage erstmalig in Betrieb genommen wird. Denkbar ist es allerdings auch, dass der Referenzwert kontinuierlich geändert wird. Hierbei ist es denkbar, dass als Referenzwert beispielsweise der Differenzdruckwert einer früheren Messung verwendet wird.

Die Erfindung betrifft ferner eine Sauerstoffreduzierungsanlage zur Brandverhütung und/oder Brandlöschung, welche ausgelegt ist, das erfindungsgemäße Verfahren durchzuführen. Hierzu weist die Sauerstoffreduzierungsanlage ein Kompressorsystem zum Komprimieren eines zumindest Stickstoff und Sauerstoff enthaltenen Anfangs-Gasgemisches und ein dem Kompressorsystem nachgeschaltetes Gasseparationssystem auf, in welchem im Betrieb zumindest ein Teil des in dem Anfangs-Gasgemisch enthaltenen Sauerstoff abgetrennt wird, so dass am Ausgang des Gasseparationssystems ein mit Stickstoff angereichertes Gas bereitgestellt wird. Dieses mit Stickstoff angereicherte Gas ist über ein Leitungssystem in den umschlossenen Raum einleitbar, um bei der Durchführung des erfindungsgemäßen Verfahrens einen entsprechenden Druckaufbau in dem Raum zu bewirken. Die erfindungsgemäße Sauerstoffreduzierungsanlage ist vorzugsweise ferner mit einem Druckmesssystem, insbesondere Differenzdruckmesssystem ausgerüstet, um den sich im Inneren des umschlossenen Raumes einstellenden oder eingestellten Druck im Vergleich zum Umgebungsluftdruck zu bestimmen.

Vorzugsweise weist die erfindungsgemäße Sauerstoffreduzierungsanlage zusätzlich zu dem Kompressorsystem ein Frischluft-Ventilatorsystem auf, mit welchem Frischluft in die Raumatmosphäre des umschlossenen Raumes eingeleitet werden kann.

Es ist grundsätzlich von Vorteil, wenn ein Volumenstrommesssystem vorgesehen ist, um kontinuierlich oder zu vorgegebenen oder vorgebbaren Zeiten und/oder Ereignissen die pro Zeiteinheit dem umschlossenen Raum mit Hilfe der Sauerstoffreduzierungsanlage zugeführte Gasmenge zu erfassen.

Nachfolgend werden unter Bezugnahme auf die beiliegenden Zeichnungen vorteilhafte Ausführungsformen der Erfindung beschrieben.

Es zeigen:
- Fig. 1: eine exemplarische Ausführungsform der erfindungsgemäßen Sauerstoffreduzierungsanlage in einer schematischen Ansicht;
- Fig. 2: ein Ablaufdiagramm zur Verdeutlichung einer exemplarischen Ausführungsform des erfindungsgemäßen Verfahrens; und
- Fig. 3: eine graphische Darstellung des Druckverlaufes in einem umschlossenen Raum bei Einleitung von Gas mit unterschiedlichen Volumenströmen jeweils bei zwei unterschiedlichen Luftwechselraten des Raumes.

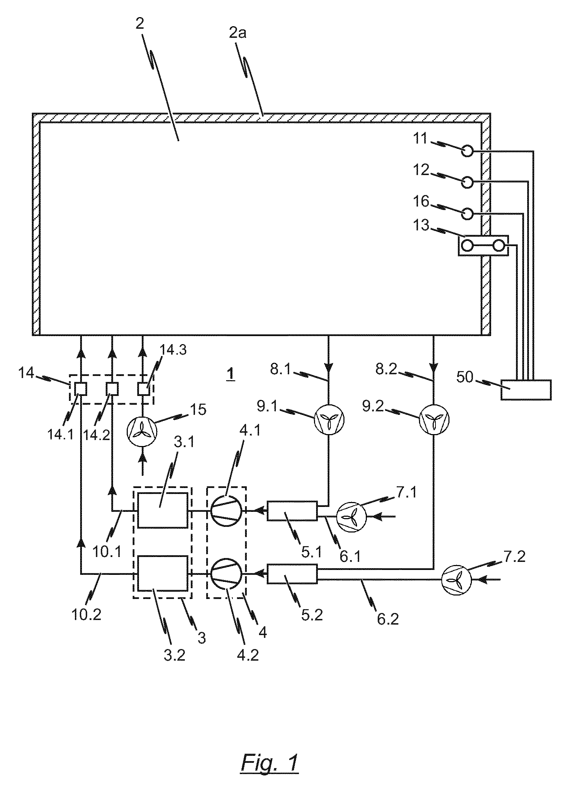

Fig. 1 zeigt in einer schematischen Darstellung eine exemplarische Ausführungsform einer Sauerstoffreduzierungsanlage 1 gemäß der vorliegenden Erfindung. Die Sauerstoffreduzierungsanlage 1 ist einem umschlossenen Raum 2 (auch "Schutzraum" genannt) zugeordnet und dient zum bedarfsweisen Einstellen und Halten eines vorgebbaren Inertisierungsniveaus in der Raumatmosphäre des umschlossenen Raumes 2. Der umschlossene Raum 2 kann beispielsweise eine Lagerhalle sei, bei welcher als präventive Brandschutzmaßnahme der Sauerstoffgehalt in der Raumluft auf ein bestimmtes Inertisierungsniveau von beispielsweise 15 Vol.-% oder geringer abgesenkt und gehalten wird.

Die erfindungsgemäße Sauerstoffreduzierungsanlage ist jedoch nicht nur zum präventiven Brandschutz ausgelegt, sondern kann beispielsweise auch derart ausgebildet sein, dass diese nur dann den Sauerstoffgehalt in der Raumatmosphäre des umschlossenen Raumes 2 absenkt, wenn ein Feuer in dem umschlossenen Raum 2 ausbricht.

Die Inertisierung des umschlossenen Raumes 2 wird mit Hilfe einer Steuereinrichtung 50 automatisch und vorzugsweise wahlweise automatisch durchgeführt. Hierzu weist die Sauerstoffreduzierungsanlage 1 gemäß der in Fig. 1 dargestellten exemplarischen Ausführungsform ein Gasseparationssystem 3 und ein Kompressorsystem 4 auf.

Das Kompressorsystem 4 wird bei der in Fig. 1 gezeigten exemplarischen Ausführungsform von einem nach der PSA- oder VPSA-Technik betriebenen Stickstoffgenerator 3.1 und von einem auf der Membran-Technik basierenden Stickstoffgenerator 3.2 gebildet. Im Einzelnen weist der auf der PSA/VPSA-Technik basierende Stickstoffgenerator 3.1 mindestens ein Adsorberbehälter mit Adsorbermaterial auf, welches ausgelegt ist, Sauerstoffmoleküle zu adsorbieren, wenn ein sauerstoffenthaltenes Gas durch den Adsorberbehälter geleitet wird.

Bei dem auf der Membran-Technik basierenden Stickstoffgenerator 3.2 kommt ein Membransystem zum Einsatz, bei dem ausgenutzt wird, dass verschiedene Gase unterschiedlich schnell durch bestimmte Materialien diffundieren. Denkbar hierbei ist es, eine Hohlfasermembran mit einem auf die Außenfläche der Hohlfasermembran aufgebrachten Separationsmaterial zu verwenden, durch welches Sauerstoff sehr gut diffundieren kann, wohingegen Stickstoff für dieses Separationsmaterial nur eine geringe Diffusionsgeschwindigkeit aufweist. Wird eine derart präparierte Hohlfasermembran innen von Luft durchströmt, diffundiert der in der Luft enthaltene Sauerstoff schnell durch die Hohlfaserwandung nach außen, während der Stickstoff weitgehend im Faserinneren gehalten wird, so dass während des Durchgangs durch die Hohlfaser eine Aufkonzentration des Stickstoffs stattfindet.

Obwohl in der schematischen Darstellung gemäß Fig. 1 jeweils nur ein auf der PSA/VPSA-Technologie basierender Stickstoffgenerator 3.1 und ein auf der Membran-Technologie basierender Stickstoffgenerator 3.2 dargestellt sind, ist es selbstverständlich denkbar, mehrere parallel zueinander geschaltete Stickstoffgeneratoren des gleichen Arbeitsprinzips einzusetzen.

Das Kompressorsystem 4 gemäß der in Fig. 1 dargestellten exemplarischen Ausführungsform weist einen dem PSA/VPSA-Stickstoffgenerator 3.1 zugeordneten ersten Kompressor 4.1 sowie einen dem Membran-Stickstoffgenerator 3.2 zugeordneten zweiten Kompressor 4.2 auf. Beide Kompressoren 4.1, 4.2 dienen dazu, am Eingang des entsprechenden Stickstoffgenerators 3.1, 3.2 ein Anfangs-Gasgemisch in komprimierter Form bereitzustellen. Hierzu sind die jeweiligen druckseitigen Ausgänge der Kompressoren 4.1, 4.2 mit den jeweiligen Eingängen der zugeordneten Stickstoffgeneratoren 3.1, 3.2 strömungsmäßig verbunden bzw. verbindbar.

Zu jedem Stickstoffgenerator 3.1, 3.2 gehört eine vorgeschaltete Mischkammer 5.1, 5.2, in welcher das Anfangs-Gasgemisch bereitgestellt wird, welches mit Hilfe des entsprechenden Kompressors 4.1, 4.2 dem jeweiligen Stickstoffgenerator 3.1, 3.2 zugeführt wird.

Unter dem hierin verwendeten Begriff "Anfangs-Gasgemisch" ist grundsätzlich eine Gasmischung bestehend aus Stickstoff, Sauerstoff und gegebenenfalls anderen Komponenten zu verstehen. Bei dem Anfangs-Gasgemisch kann es sich insbesondere um Frischluft, d.h. Luft aus der Außenatmosphäre handeln, die bekanntlich zu 21 Vol.-% aus Sauerstoff, 78 Vol.-% aus Stickstoff und 1 Vol.-% aus sonstigen Gasen, insbesondere Edelgasen zusammensetzt. Zu diesem Zweck ist jede Mischkammer 5.1, 5.2 mit einer entsprechenden Frischluftzufuhrleitung 6.1, 6.2 versehen, über welche mit Hilfe eines Frischluftventilators 7.1, 7.2 der Mischkammer 5.1, 5.2 bedarfsweise Frischluft zugeführt werden kann.

Um die Effizienz des bei der erfindungsgemäßen Sauerstoffreduzierungsanlage 1 zum Einsatz kommenden Gasseparationssystems 3 zu erhöhen, ist bei der in Fig. 1 exemplarisch dargestellten Ausführungsform auch eine Rückführung vorgesehen. Die Rückführung dient dazu, bedarfsweise der Raumluftatmosphäre des umschlossenen Raumes 2 einen Teil der Raumluft zu entnehmen und diesen Teil der entsprechenden Mischkammer 5.1, 5.2 zuzuführen, in welcher der entnommene Teil der Raumluft mit der über die entsprechende Frischluftzufuhrleitung 6.1, 6.2 zugeführten Frischluft vermischt wird. Dann ist das Anfangs-Gasgemisch eine Mischung aus Frischluft und Raumluft, welche gegebenenfalls einen im Vergleich zur Frischluft reduzierten Sauerstoffgehalt aufweist.

Um die Rückführung der Raumluft zu ermöglichen, sind bei der in Fig. 1 schematisch dargestellten Ausführungsform der erfindungsgemäßen Sauerstoffreduzierungsanlage 1 entsprechende Rückführungsleitungen 8.1, 8.2 vorgesehen, über die bedarfsweise beispielsweise mit Hilfe eines Rückführungsventilators 9.1, 9.2 ein Teil der Raumluft des umschlossenen Raumes entnommen werden kann. Im Einzelnen ist bei der exemplarisch dargestellten Ausführungsform der erfindungsgemäßen Sauerstoffreduzierungsanlage 1 sowohl für den PSA/VPSA-Stickstoffgenerator 3.1 als auch für den Membran-Stickstoffgenerator 3.2 jeweils ein Rückführungsventilator 9.1, 9.2 vorgesehen. Jeder der beiden Rückführungsventilatoren 9.1, 9.2 ist mit seinem saugseitigen Eingang über eine der Rückführungsleitungen 8.1, 8.2 mit dem Inneren des umschlossenen Raumes 2 strömungsmäßig verbunden oder verbindbar. Der druckseitige Ausgang eines jeden Rückführungsventilators 9.1, 9.2 ist mit der entsprechenden Mischkammer 5.1, 5.2 des zugeordneten Stickstoffgenerators 3.1, 3.2 strömungsmäßig verbunden oder verbindbar.

Um mit Hilfe der Sauerstoffreduzierungsanlage 1 in der Raumatmosphäre des umschlossenen Raumes 2 den Sauerstoffgehalt im Vergleich zum Sauerstoffgehalt der Umgebungsluft (21 Vol.-%) zu reduzieren und somit ein entsprechendes Absenkungs- bzw. Inertisierungsniveau einzustellen, wird mit Hilfe des ersten Kompressorsystems 4.1 das in der ersten Mischkammer 5.1 bereitgestellte Anfangs-Gasgemisch komprimiert und dem PSA/VPSA-Stickstoffgenerator 3.1 zugeführt, in welchem zumindest ein Teil des in dem Anfangs-Gasgemisch enthaltenen Sauerstoffs abgetrennt wird, so dass am Ausgang des PSA/VPSA-Stickstoffgenerators 3.1 ein mit Stickstoff angereichertes Gasgemisch zur Verfügung steht. Dieses mit Stickstoff angereicherte Gasgemisch wird anschließend über ein Zufuhrleitungssystem 10.1 der Raumluftatmosphäre des umschlossenen Raumes zugeführt.

Zusätzlich oder alternativ hierzu wird mit dem zweiten Kompressor 4.2 das in der zweiten Mischkammer 5.2 bereitgestellte Anfangs-Gasgemisch komprimiert und dem Membran-Stickstoffgenerator 3.2 zugeführt, so dass am Ausgang des Membran-Stickstoffgenerators 3.2 ebenfalls ein mit Stickstoff angereichertes Gasgemisch vorliegt, welches über ein zweites Zufuhrleitungssystem 10.2 in die Raumluftatmosphäre des umschlossenen Raumes eingeleitet wird.

Im normalen Betriebsmodus der Sauerstoffreduzierungsanlage 1, d.h. in einem Betriebsmodus, in welchem mit der Sauerstoffreduzierungsanlage 1 ein präventiver Brandschutz oder eine Brandbekämpfung erfolgt, wird zum Zwecke der Effizienzoptimierung des Gasseparationssystems 3 als Anfangs-Gasgemisch eine Mischung aus Frischluft und Raumluft verwendet. Zu diesem Zweck sind beide Mischkammern 5.1, 5.2 über die entsprechenden Rückführungsventilatoren 9.1, 9.2 und die zugehörigen Rückführungsleitungen 8.1, 8.2 strömungsmäßig mit dem Inneren des umschlossenen Raumes 2 verbunden. Gleichzeitig wird in geregelter Weise mit Hilfe der entsprechenden Frischluftventilatoren 7.1, 7.2 den zugeordneten Mischkammern 5.1, 5.2 Frischluft zugeführt.

Die in Fig. 1 schematisch dargestellte exemplarische Ausführungsform der erfindungsgemäßen Sauerstoffreduzierungsanlage 1 ist ferner mit einer Steuereinrichtung 50 versehen, mit welcher vorzugsweise automatisch und noch bevorzugter wahlweise automatisch die entsprechenden ansteuerbaren Komponenten der Sauerstoffreduzierungsanlage angesteuert werden. Zu diesem Zweck weist die Sauerstoffreduzierungsanlage 1 ein Sauerstoffmesssystem 11 auf, mit welchem kontinuierlich oder zu vorgegebenen oder vorgebbaren Zeiten und/oder Ereignissen der Sauerstoffgehalt in der Raumluftatmosphäre des umschlossenen Raumes 2 erfasst wird. Abhängig von dem erfassten Sauerstoffgehalt steuert die Steuereinrichtung 50 das Gasseparationssystem 3 und/oder das Kompressorsystem 4 und/oder die entsprechenden Frischluftventilatoren 7.1, 7.2 bzw. Rückführungsventilatoren 9.1, 9.2 an, damit in der Raumatmosphäre des umschlossenen Raumes ein vorab festlegbares Absenkungsniveau eingestellt und/oder gehalten werden kann.

Vorzugsweise weist die Sauerstoffreduzierungsanlage 1 ferner ein insbesondere aspirativ arbeitendes Brandmeldesystem auf, welches vorzugsweise kontinuierlich überprüft, ob in der Raumluftatmosphäre des umschlossenen Raumes 2 Brandkenngrößen vorliegen. Im Falle eines Brandes gibt das Brandmeldesystem 12 eine entsprechende Alarmierung an die Steuereinrichtung 50 ab, welche die Absenkung des Sauerstoffgehaltes in der Raumluftatmosphäre des umschlossenen Raumes 2 auf ein Vollinertisierungsniveau initiiert. "Vollinertisierung" bedeutet in diesem Zusammenhang die Reduzierung des Sauerstoffgehalts in der Raumluftatmosphäre des umschlossenen Raumes 2 so weit, dass die Entflammbarkeit der in den umschlossenen Raum enthaltenen Materialien (Brandlast) nicht mehr gegeben ist. Das Vollinertisierungsniveau liegt üblicherweise bei etwa 12 - 14 Vol-% Sauerstoffgehalt.

Die erfindungsgemäße Sauerstoffreduzierungsanlage 1 eignet sich nicht nur dazu, um in der Raumatmosphäre des umschlossenen Raumes 2 zum Zwecke eines präventiven Brandschutzes und/oder zum Zwecke einer Brandlöschung ein sauerstoffverdrängendes Gas (Inertgas) einzuleiten, so dass in der Raumatmosphäre ein im Vergleich zur normalen Umgebungsluft reduzierter Sauerstoffgehalt einstellbar und haltbar ist, sondern auch um die Luftdichtigkeit des umschlossenen Raumes 2 zu bestimmen und/oder zu überwachen. Damit die Sauerstoffreduzierungsanlage 1 diese zusätzliche Funktionalität aufweist, ist ein Differenzdruckmesssystem 13 vorgesehen, mit welchem eine Differenz zwischen einem im Inneren des umschlossenen Raumes 2 herrschenden Druck (Innendruck) und einem Außendruck bestimmt werden kann. Des Weiteren kommt bei der in Fig. 1 schematisch dargestellten exemplarischen Ausführungsform der erfindungsgemäßen Sauerstoffreduzierungsanlage 1 ein Volumenstrommesssystem 14 zum Einsatz, mit welcher kontinuierlich oder zu vorgegebenen oder vorgebbaren Zeiten und/oder Ereignissen die pro Zeiteinheit in den umschlossenen Raum insgesamt eingeleitete Gasmenge erfassbar ist.

Im Einzelnen weist bei der in Fig. 1 dargestellten exemplarischen Ausführungsform das Volumenstrommesssystem 14 zwei entsprechende Volumenstromsensoren 14.1, 14.2 auf, wobei jeweils ein Volumenstromsensor 14.1, 14.2 in einem der beiden Zufuhrleitungssysteme 10.1, 10.2 angeordnet ist.

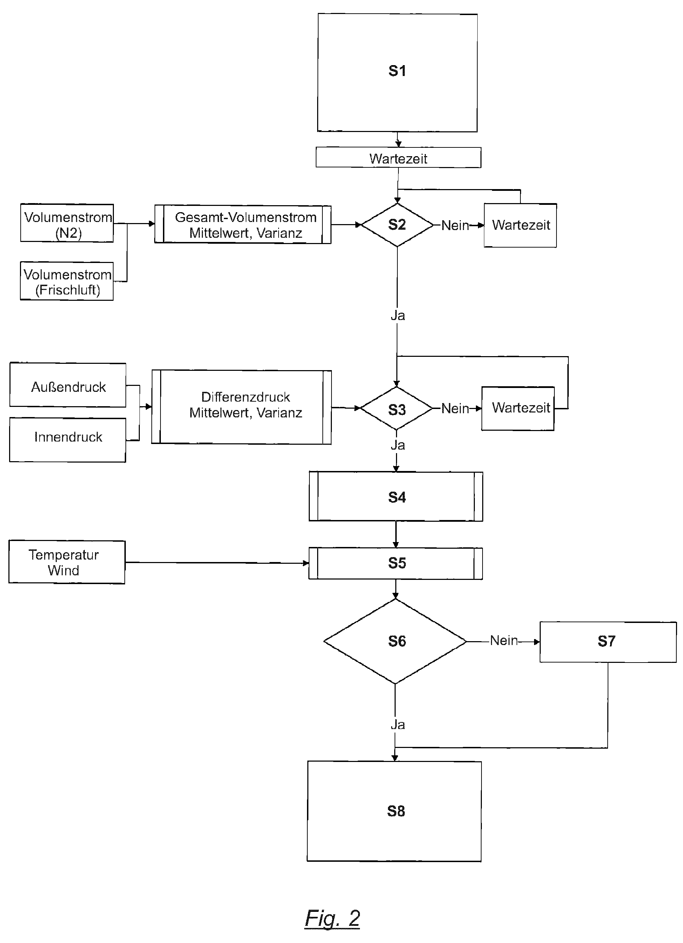

Nachfolgend wird unter Bezugnahme auf das in Fig. 2 gezeigte Ablaufdiagramm eine exemplarische Ausführungsform des erfindungsgemäßen Verfahrens zum Bestimmen und/oder Überwachen der Luftdichtigkeit eines umschlossenen Raumes 2 beschrieben. Das Verfahren ist insbesondere bei der in Fig. 1 dargestellten exemplarischen Ausführungsform der erfindungsgemäßen Sauerstoffreduzierungsanlage 1 ausführbar, wobei zu diesem Zweck die Steuereinrichtung 50 eine entsprechende Ablaufsteuerung und/oder Auswertelogik aufweist.

Wenn die Luftdichtigkeit des umschlossenen Raumes 2 ermittelt werden soll, werden in einem ersten Verfahrensschritt (Schritt S1) die entsprechenden Startwerte gesetzt. Das bedeutet insbesondere, dass die Rückführung von Raumluft zu den entsprechenden Mischkammern 5.1, 5.2 durch Abschalten der Rückführungsventilatoren 9.1, 9.2 und/oder durch Unterbrechen der strömungsmäßigen Verbindung der Mischkammern 5.1, 5.2 zu dem umschlossenen Raum 2 eingestellt wird. Mit anderen Worten, im Luftdichtigkeits-Überwachungsmodus der Sauerstoffreduzierungsanlage 1 sind die entsprechenden Mischkammern 5.1, 5.2 eingangsseitig nur mit den zugehörigen Frischluftventilatoren 7.1, 7.2 verbunden, so dass als Anfangs-Gasgemisch reine Frischluft verwendet wird.

Zusätzlich zu der mit Hilfe der Frischluftventilatoren 7.1, 7.2 vorgenommenen Zufuhr von Frischluft als Anfangs-Gasgemisch kann es auch vorgesehen sein, dass die Rückführungsventilatoren 9.1, 9.2 mit Hilfe von (in Fig. 1 nicht dargestellten) Ventilen entsprechend umgeschaltet werden, um die Frischluftventilatoren 7.1, 7.2 zu unterstützen und ebenfalls dem umschlossenen Raum 2 Frischluft als Anfangs-Gasgemisch zuzuführen. Mit anderen Worten, es ist also auch möglich, die Rückführungsventilatoren 9.1, 9.2 ansaugseitig derart umzuleiten, dass sie die Frischluftventilatoren 7.1, 7.2 bei der Messung unterstützen (in Fig. 1 nicht dargestellt).

Im Verfahrensschritt S1 wird ferner das Kompressorsystem 4 eingeschaltet, und im Einzelnen vorzugsweise beide zu dem Kompressorsystem 4 gehörenden Kompressoren 4.1, 4.2, so dass sowohl dem PSA/VPSA-Stickstoffgenerator 3.1 als auch dem Membran-Stickstoffgenerator 3.2 komprimierte Frischluft als Anfangs-Gasgemisch bereitgestellt wird. In den Stickstoffgeneratoren 3.1, 3.2 findet eine Gasseparation statt. Das an den jeweiligen Ausgängen der Stickstoffgeneratoren 3.1, 3.2 bereitgestellte und mit Stickstoff angereicherte Gas wird über die entsprechenden Zufuhrleitungssysteme 10.1, 10.2 dem umschlossenen Raum 2 zugeführt.

Um die pro Zeiteinheit in dem umschlossenen Raum 2 zugeführte Menge an Gas weiter zu erhöhen, ist es von Vorteil, dass im Luftdichtigkeits-Überwachungsmodus der Sauerstoffreduzierungsanlage 1 nicht nur das Kompressorsystem 4 (hier: vorzugsweise beide Kompressoren 4.1, 4.2) eingeschaltet wird, sondern auch vorzugsweise beide Frischluftventilatoren 7.1, 7.2.

Denkbar hierbei ist es ferner, auch zusätzlich reine Frischluft dem umschlossenen Raum 2 zuzuführen, wenn die Sauerstoffreduzierungsanlage 1 - wie in Fig. 1 schematisch dargestellt - mit einem entsprechenden zusätzlichen Frischluftventilatorsystem 15 ausgerüstet ist. In diesem Fall sollte das Frischluftventilatorsystem 15, welches optional vorgesehen sein kann, auch mit einem Volumenstromsensor 14.3 versehen sein, um die pro Zeiteinheit dem umschlossenen Raum 2 zugeführte Menge an Frischluft erfassen zu können.

Ferner ist es auch denkbar, das Gasseparationssystem 3 derart geregelt zu betreiben, dass zum Zwecke des Bestimmens und/oder Überwachens der Luftdichtigkeit des umschlossenen Raumes 2 eine Stickstoffreinheit an Gasseparationssystem 3 eingestellt und durch Regelung gehalten wird, die der Stickstoffkonzentration der Schutzatmosphäre entspricht oder höher als diese ist. Hierdurch ist es möglich, den Gasfluss während des Bestimmens und/oder Überwachens der Luftdichtigkeit des umschlossenen Raumes 2 zu erhöhen und die mit Hilfe der Frischluftventilatoren 7.1, 7.2 notwendigerweise als Anfangs-Gasgemisch zuzuführende reine Frischluft zu verringert.

Während der Gaszufuhr wird vorzugsweise kontinuierlich mit den Volumenstromsensoren 14.1, 14.2 und 14.3 die pro Zeiteinheit dem umschlossenen Raum zugeführte Menge an Gas erfasst. Hierbei ist Sorge zu tragen, dass die zum Einsatz kommenden Kompressoren 4.1, 4.2 und die gegebenenfalls zum Einsatz kommenden Frischluftventilatoren 7.1, 7.2 bzw. das optional zum Einsatz kommende Frischluftventilatorsystem 15 derart von der Steuereinrichtung 50 angesteuert werden, dass eine kontinuierliche Gaszufuhr mit konstantem Volumenstrom Q gewährleistet ist. Zu diesem Zweck wird bei der exemplarischen Ausführungsform des in dem Ablaufdiagramm gemäß Fig. 2 dargestellten erfindungsgemäßen Verfahren nach einer gewissen Wartezeit von vorzugsweise einigen Minuten im Verfahrensschritt S2 geprüft, ob die Gaszufuhr zu dem umschlossenen Raum 2 mit einem konstanten Volumenstrom Q erfolgt und zeitlich gesehen kontinuierlich ist.

Stellt sich im Schritt S2 heraus, dass die Varianz der Messwerte des mit Hilfe des Volumenstrommesssystems 14 erfassten Volumenstroms eine vorgegebene Toleranz überschreitet, wird nach einer bestimmten Wartezeit von beispielsweise einer Minute erneut geprüft, ob dann das Gas mit konstantem Volumenstrom Q dem umschlossenen Raum 2 zugeführt wird. Diese Abfrage im Verfahrensschritt S2 wiederholt sich so lange, bis die Varianz des Volumenstromes innerhalb der vorgegebenen Toleranz liegt.

Wenn sich im Verfahrensschritt S2 zeigt, dass dem umschlossenen Raum 2 kontinuierlich und mit konstantem Volumenstrom Q Gas zugeführt wird, erfolgt die Differenzdruckmessung mit Hilfe des Differenzdruckmesssystems 13 beim Verfahrensschritt S3. Vorzugsweise wird beim Verfahrensschritt S3 ein Mittelwert und die Varianz einer Vielzahl von über das Differenzdruckmesssystem 13 aufgenommenen Druckwerten ermittelt. Zeigt sich dabei, dass die Varianz eine vorab festgelegte Toleranz überschreitet, erfolgt eine erneute Aufnahme einer Differenzdruckmessreihe nach einer Wartezeit von beispielsweise einer Minute. Dies wird solange wiederholt, bis im Verfahrensschritt S3 die Varianz der Differenzdruckmesswert innerhalb einer vorgegebenen Toleranz liegt.

Dann wird im Verfahrensschritt S4 mit Hilfe des Volumenstrommesssystems 14 der Volumenstrom Q erfasst, mit welchem das Gas dem umschlossenen Raum 2 zugeführt wird. Vorzugsweise findet auch im Verfahrensschritt S4 eine Mittelwertbildung von mehreren mit Hilfe des Volumenstrommesssystems 14 erfassten Volumenstromwerten statt.

Anschließend wird die Temperatur in dem umschlossenen Raum 2 mit Hilfe eines Temperaturmesssystems 16 erfasst. Im Verfahrensschritt S5 wird unter Berücksichtigung der erfassten Temperatur der im Verfahrensschritt S3 erfasste Messwert des Differenzdruckes normiert.

Anschließend erfolgt im Verfahrensschritt S6 ein Vergleich des normierten Differenzdruckes mit einem vorab festgelegten bzw. vorab eingelernten Referenzwert. Zeigt der Vergleich, dass der erfasste normierte Differenzdruck von dem Referenzwert abweicht, findet eine Alarmierung (Schritt S7) statt, sofern die Abweichung einen vorab festgelegten Toleranzwert überschreitet. Bei der im Schritt S7 stattfindenden Alarmierung handelt es sich beispielsweise um die Ausgabe einer Warnmeldung betreffend eine erhöhte Leckagegefahr.

Wenn hingegen im Schritt S6 der erfasste und normierte Differenzdruck innerhalb des vorgegebenen Toleranzbereich liegt, wird im Schritt S8 der Betriebsmodus der Sauerstoffreduzierungsanlage von dem Luftdichtigkeits-Überwachungsmodus zum Brandschutz-/Brandlöschungs-Modus zurückgestellt. Des Weiteren wird der ermittelte, normierte Differenzdruck in der Steuereinrichtung 50 abgelegt.

Das Umstellen des Betriebsmodus der Sauerstoffreduzierungsanlage betrifft insbesondere die erneute Aktivierung der Rückführung von Raumluft zu den entsprechenden Mischkammern 5.1, 5.2 sowie die geeignete Ansteuerung der Kompressoren 4.1, 4.2 derart, dass ein vorgebbarer bzw. vorgegebener reduzierter Sauerstoffgehalt in der Raumluftatmosphäre des umschlossenen Raumes 2 eingestellt und dort gehalten wird. Das optional vorgesehene Frischluftventilatorsystem 15 wird ebenfalls wieder in den normalen Betriebsmodus umgeschaltet.

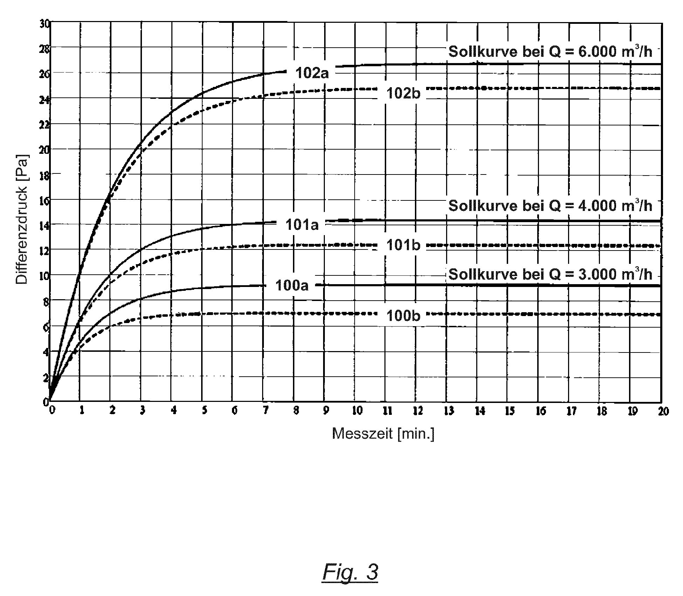

In Fig. 3 ist grafisch dargestellt, wie sich - abhängig von unterschiedlichen Volumenströmen - bei einer Realisierung der erfindungsgemäßen Lösung zeitlich im Inneren eines umschlossenen Raums 2 der Druck aufbaut. Im Einzelnen ist auf der Abszissenachse die Messzeit in Minuten [min] und auf der Ordinatenachse der mit dem Differenzdruckmesssystem 13 erfasste Differenzdruck gegenüber Außendruck in Pascal [Pa] angegeben. Das Raumvolumen des umschlossenen Raumes betrug 600.000 m³.

Der in Fig. 3 mit der Bezugsziffer "100a" gekennzeichnete Kurvenverlauf zeigt den Druckaufbau in dem umschlossenen Raum 2 bei einem zugeführten Volumenstrom Q von 3.000 m³/h, wobei die Luftdichtigkeit des umschlossenen Raumes 2 seinem Anfangswert bzw. Sollwert entspricht. Dieser Sollwert dient bei dem zugeführten Volumenstrom Q von 3.000 m³/h dem Referenzwert.

Der mit der Bezugsziffer "100b" bezeichnete Kurvenverlauf gibt eine Situation wieder, wenn bei einem zugeführten Volumenstrom Q von 3.000 m³/h in der Raumhülle 2a des umschlossenen Raumes 2 zusätzliche Leckagen vorgesehen sind, so dass der sich in dem Raum 2 einstellende Differenzdruck von dem Referenzwert (Kurvenverlauf 100a) abweicht, was bedeutet, dass die Luftdichtigkeit des umschlossenen Raumes 2 nicht mehr seinem Anfangswert bzw. Sollwert (vgl. Kurvenverlauf 100a) entspricht. Die Differenz zwischen dem Kurvenverlauf 100a und dem Kurvenverlauf 100b in der Größe der Druckmessunsicherheit von ca. 2 Pa zeigt an, dass die Luftdichtigkeit des Raumes 2 insgesamt mindestens um die zu detektierende relative Änderung des n50-Wertes abgenommen hat und entsprechende Maßnahmen zu unternehmen sind.

Die Kurvenverläufe 101a, 101b und 102a, 102b zeigen den entsprechenden Druckaufbau bei einem Volumenstrom Q von 4.000 m³/h bzw. 6.000 m³/h jeweils ohne zusätzliche Leckage (vgl. Kurvenverläufe 101a, 102a) und mit zusätzlichen Leckagen (vgl. Kurvenverläufe 101b, 102b).

Die Erfindung ist nicht auf die in den Zeichnungen exemplarisch dargestellten Ausführungsformen beschränkt, sondern ergibt sich aus einer Zusammenschau sämtlicher hierin offenbarter Merkmale.

Insbesondere ist es denkbar, dass bei dem Vergleich des normierten Differenzdruckes mit einem vorab festgelegten bzw. vorab eingelernten Referenzwert auch die momentan herrschende Windgeschwindigkeit berücksichtigt wird. Der Einfluss der Windgeschwindigkeit auf den sich im Raum einstellenden Differenzdruck könnte auch bereits vorher, beispielsweise bei der Temperaturkompensation (Schritt S5) berücksichtigt werden.

### Bezugszeichenliste

- 1: Sauerstoffreduzierungsanlage
- 2: umschlossener Raum
- 2a: Raumhülle
- 3: Gasseparationssystem
- 3.1: PSA/VPSA-Stickstoffgenerator des Gasseparationssystems
- 3.2: Membran-Stickstoffgenerator des Gasseparationssystems
- 4: Kompressorsystem
- 4.1: erster Kompressor des Kompressorsystems
- 4.2: zweiter Kompressor des Kompressorsystems
- 5.1: erste Mischkammer
- 5.2: zweite Mischkammer
- 6.1: erste Frischluftzufuhrleitung
- 6.2: zweite Frischluftzufuhrleitung
- 7.1: erster Frischluftventilator
- 7.2: zweiter Frischluftventilator
- 8.1: erste Rückführungsleitung
- 8.2: zweite Rückführungsleitung
- 9.1: erster Rückführungsventilator
- 9.2: zweiter Rückführungsventilator
- 10.1: erstes Zufuhrleitungssystem
- 10.2: zweites Zufuhrleitungssystem
- 11: Sauerstoffmesssystem
- 12: Brandmeldesystem
- 13: Differenzdruckmesssystem
- 14: Volumenstrommesssystem
- 14.1: erster Volumenstromsensor des Volumenstrommesssystems
- 14.2: zweiter Volumenstromsensor des Volumenstrommesssystems
- 14.3: dritter Volumenstromsensor des Volumenstrommesssystems
- 15: Frischluftventilatorsystem
- 16: Temperaturmesssystem
- 50: Steuereinrichtung

## Patentansprüche

1. Verfahren zum Bestimmen und/oder Überwachen der Luftdichtigkeit eines umschlossenen und mit einer Sauerstoffreduzierungsanlage (1) ausgerüsteten Raumes (2), in dessen Raumatmosphäre durch Einleiten eines sauerstoffverdrängenden Gases mindestens ein vorzugsweise vorab festlegbarer und im Vergleich zur normalen Umgebungsluft reduzierter Sauerstoffgehalt einstellbar und haltbar ist, wobei die Sauerstoffreduzierungsanlage (1) ein Kompressorsystem (4; 4.1, 4.2) zum Komprimieren eines zumindest Stickstoff und Sauerstoff enthaltenden Anfangs-Gasgemisches und ein dem Kompressorsystem (4; 4.1, 4.2) nachgeschaltetes Gasseparationssystem (3; 3.1, 3.2) aufweist zum Abtrennen von zumindest einem Teil des in dem Anfangs-Gasgemisch enthaltenen Sauerstoffs und zum Bereitstellen eines mit Stickstoff angereicherten Gases am Ausgang des Gasseparationssystems (3; 3.1, 3.2), welches zum Einstellen und/oder Halten eines reduzierten Sauerstoffgehaltes dem umschlossenen Raum (2) zuführbar ist, wobei das Verfahren die folgenden Verfahrensschritte aufweist:
i) Bereitstellen von Frischluft von außerhalb des umschlossenen Raumes (2) als Anfangs-Gasgemisch;
ii) Komprimieren der bereitgestellten Frischluft in dem Kompressorsystem (4; 4.1, 4.2) der Sauerstoffreduzierungsanlage (1);
iii) Zuführen der komprimierten Frischluft zu dem Gasseparationssystem (3; 3.1, 3.2) der Sauerstoffreduzierungsanlage (1) und Abtrennen von zumindest einem Teil des in der Frischluft enthaltenen Sauerstoffs in dem Gasseparationssystem (3; 3.1, 3.2), so dass am Ausgang des Gasseparationssystems (3; 3.1, 3.2) ein mit Stickstoff angereichertes Gas bereitgestellt wird;
iv) Einleiten des am Ausgang des Gasseparationssystems (3; 3.1, 3.2) bereitgestellten und mit Stickstoff angereicherten Gases in den umschlossenen Raum (2);
v) Ermitteln eines im umschlossenen Raum (2) herrschenden oder sich im umschlossenen Raum (2) einstellenden Druckes bezogen auf den Umgebungsluftdruck;
**gekennzeichnet durch** die Verfahrensschritte:
vi) Vergleichen von mindestens einem im Verfahrensschritt v) ermittelten Differenzdruckwert mit einem entsprechenden Referenzwert; und
vii) Auswerten des in Verfahrensschritt vi) gewonnenen Vergleichsergebnisses, wobei abhängig von der Höhe einer Abweichung zwischen dem ermittelten Differenzdruckwert und dem entsprechenden Referenzwert eine Aussage über die Luftdichtigkeit des umschlossenen Raumes (2) getroffen wird und/oder eine Überwachung der Luftdichtigkeit des umschlossenen Raumes (2) erfolgt.

2. Verfahren nach Anspruch 1,
wobei im Verfahrensschritt iv) zusätzlich zu dem am Ausgang des Gasseparationssystems (3; 3.1, 3.2) bereitgestellten Gas vorzugsweise mit einem zur Sauerstoffreduzierungsanlage (1) gehörenden Frischluftventilatorsystem (15) und/oder mit dem zur Sauerstoffreduzierungsanlage (1) gehörenden Kompressorsystem (4; 4.1, 4.2) Frischluft in den umschlossenen Raum (2) eingeleitet wird.

3. Verfahren nach Anspruch 1 oder 2,
wobei das im Verfahrensschritt iv) insgesamt in den umschlossenen Raum (2) eingeleitete Gas mit einem konstanten Volumenstrom eingeleitet wird, wobei der relative Volumenstrom (Qrel), der ein Quotient aus dem Volumenstrom (Q) und dem Produkt aus Raumvolumen und Luftwechselrate ist, vorzugsweise einen Wert zwischen 0,2 und 0,9, und noch bevorzugter einen Wert zwischen 0,34 und 0,67 annimmt.

4. Verfahren nach einem der Ansprüche 1 bis 3,
wobei der Verfahrensschritt v) gemeinsam mit oder zumindest teilweise zeitlich überlappend mit dem Verfahrensschritt iv) ausgeführt wird.

5. Verfahren nach einem der Ansprüche 1 bis 4,
wobei der mindestens eine im Verfahrensschritt v) ermittelte Druckwert zahlenmäßig einem Differenzdruck entspricht, der sich - bezogen auf den Umgebungsluftdruck - bei kontinuierlicher Zufuhr von Gas mit konstantem Volumenstrom (Q) in dem umschlossenen Raum (2) einstellt oder eingestellt hat.

6. Verfahren nach einem der Ansprüche 1 bis 5,
wobei der mindestens eine im Verfahrensschritt v) ermittelte Druckwert mit Hilfe eines Druckmesssystems, insbesondere Differenzdruckmesssystems (13) erfasst wird.

7. Verfahren nach Anspruch 6,
wobei der mindestens eine im Verfahrensschritt v) ermittelte Druckwert zu einem Zeitpunkt erfasst wird, wenn bei kontinuierlicher Zufuhr von Gas mit konstantem Volumenstrom (Q) die zeitliche Änderung des Druckes in den umschlossenen Raum (2) einen vorab festgelegten oder festlegbaren oberen Schwellwert nicht überschreitet und/oder wenn bei einer Vielzahl von ermittelten Druckwerten deren Varianz einen vorab festgelegten oder festlegbaren Schwellwert nicht überschreitet.

8. Verfahren nach einem der Ansprüche 1 bis 7,
wobei der mindestens eine im Verfahrensschritt v) ermittelte Druckwert einem Mittelwert einer Vielzahl von mit Hilfe eines Druckmesssystems, insbesondere Differenzdruckmesssystems (13) erfassten Drücke entspricht.

9. Verfahren nach einem der Ansprüche 6 bis 8,
wobei ferner vorzugsweise kontinuierlich oder zu vorgegebenen Zeiten und/oder Ereignissen die Temperatur in dem umschlossenen Raum (2) gemessen wird, und wobei im Verfahrensschritt v) aus dem bzw. den mit Hilfe des Druckmesssystems, insbesondere Differenzdruckmesssystems (13) erfassten Druck bzw. Drücken der mindestens eine Druckwert unter Berücksichtigung der gemessenen Temperatur ermittelt wird.

10. Verfahren nach einem der Ansprüche 1 bis 9,
wobei eine Warnmeldung ausgegeben wird, wenn im Verfahrensschritt vi) der Vergleich zwischen dem mindestens einen im Verfahrensschritt v) ermittelten Druckwert und dem Referenzwert zeigt, dass der ermittelte Druckwert von dem Referenzwert um mehr als eine vorgebbare Toleranz abweicht.

11. Verfahren nach einem der Ansprüche 1 bis 10,
wobei die im Verfahrensschritt iv) pro Zeiteinheit in den umschlossenen Raum (2) insgesamt eingeleitete Gasmenge vorzugsweise mit Hilfe eines Volumenstrommesssystems (14) kontinuierlich oder zu vorgegebenen oder vorgebbaren Zeiten und/oder Ereignissen erfasst wird.

12. Verfahren nach einem der Ansprüche 1 bis 11,
wobei die Sauerstoffreduzierungsanlage (1) ferner mindestens einen ansteuerbar ausgebildeten Rückführungsventilator (9.1, 9.2) zum schaltbaren und wahlweisen Zuführen von Raumluft aus dem umschlossenen Raum (2) oder Frischluft aufweist, und wobei zum Durchführen des Verfahrensschrittes iii) der mindestens eine Rückführungsventilator (9.1, 9.2) derart angesteuert wird, dass Frischluft in den umschlossenen Raum (2) eingeleitet wird.

13. Verfahrens nach einem der Ansprüche 1 bis 12,
wobei die Sauerstoffreduzierungsanlage (1) ferner eine Regeleinheit aufweist, wobei die Regeleinheit dazu ausgelegt ist, während der Ausführung des Verfahrensschrittes iii) eine Stickstoffreinheit des Gasseparationssystems (3; 3.1, 3.2) auf einen vorgegebenen oder vorgebbaren Wert zu regeln, welcher einer Konzentration der Schutzbereichatmosphäre entspricht oder größer als diese ist.

14. Sauerstoffreduzierungsanlage (1), bei welcher in der Raumatmosphäre eines umschlossenen Raumes (2) ein vorgebbarer und im Vergleich zur normalen Umgebungsluft reduzierter Sauerstoffgehalt eingestellt und gehalten wird, wobei die Sauerstoffreduzierungsanlage (1) folgendes aufweist:
- ein Kompressorsystem (4; 4.1, 4.2) zum Komprimieren eines zumindest Stickstoff und Sauerstoff enthaltenen Anfangs-Gasgemisches;
- ein dem Kompressorsystem (4; 4.1, 4.2) nachgeschaltetes Gasseparationssystem (3; 3.1, 3.2) zum Abtrennen von zumindest einem Teil des in dem Anfangs-Gasgemisch enthaltenen Sauerstoffs und zum Bereitstellen eines mit Stickstoff angereicherten Gases am Ausgang des Gasseparationssystems (3; 3.1, 3.2), wobei der Ausgang des Gasseparationssystems (3; 3.1, 3.2) strömungsmäßig mit dem umschlossenen Raum (2) verbunden oder verbindbar ist; und
- ein Differenzdruckmesssystem (13) zum Ermitteln eines sich in dem umschlossenen Raum (2) einstellenden Druck bezogen auf einen Außendruck,
wobei ferner eine Steuereinrichtung (50) vorgesehen ist, adurch gekennzeichnet, dass die Steueranlage eine entsprechende Ablaufsteuerung zur Durchführung des Verfahrens nach Anspruch 1 aufweist.

## Claims

1. A method for determining and/or monitoring the airtightness of an enclosed room (2) equipped with an oxygen-reducing system (1) in which at least one level of oxygen which is reduced in comparison to the normal ambient air can preferably be preset and maintained in the spatial atmosphere of the room by introducing an oxygen-displacing gas, wherein the oxygen-reducing system (1) comprises a compressor system (4; 4.1, 4.2) for compressing an initial gas mixture containing at least nitrogen and oxygen and a gas separation system (3; 3.1, 3.2) downstream of the compressor system (4; 4.1, 4.2) for separating off at least a portion of the oxygen contained in the initial gas mixture and for providing a nitrogen-enriched gas at the outlet of the gas separation system (3; 3.1, 3.2) which can be fed into the enclosed room (2) to set and/or maintain a reduced oxygen content,
wherein the method comprises the following method steps:
i) providing fresh air from outside of the enclosed room (2) as the initial gas mixture;
ii) compressing the provided fresh air in the compressor system (4; 4.1, 4.2) of the oxygen-reducing system (1);
iii) feeding the compressed fresh air to the gas separation system (3; 3.1, 3.2) of the oxygen-reducing system (1) and separating off at least a portion of the oxygen contained in the fresh air in the gas separation system (3; 3.1, 3.2) such that a nitrogen-enriched gas is provided at the outlet of said gas separation system (3; 3.1, 3.2);
iv) introducing the nitrogen-enriched gas provided at the outlet of the gas separation system (3; 3.1, 3.2) into the enclosed room (2);
v) determining the pressure prevailing in the enclosed room (2) or set in the enclosed room (2) relative to the ambient air pressure;
**characterized by** the method steps of:
vi) comparing at least one differential pressure value determined in method step v) to a corresponding reference value; and
vii) evaluating the comparative result obtained in method step vi), wherein depending on the amount of deviation between the differential pressure value determined and the corresponding reference value, a conclusion is made as to the airtightness of the enclosed room (2) and/or monitoring of the airtightness of the enclosed room (2) occurs.

2. The method according to claim 1,
wherein additionally to the gas provided at the outlet of the gas separation system (3; 3.1, 3.2), a fresh air ventilator system (15) part of the oxygen-reducing system (1) and/or a compressor system (4; 4.1, 4.2) part of the oxygen-reducing system (1) introduces fresh air into the enclosed room (2) in method step iv).

3. The method according to claim 1 or 2,
wherein all of the gas introduced into the enclosed room (2) in method step iv) is introduced at a constant flow rate, wherein the relative volumetric flow rate (Qrel), which is a ratio of the volumetric flow rate (Q) and the product of room volume and air exchange rate, preferably assumes a value between 0.2 and 0.9 and even more preferentially a value between 0.34 and 0.67.

4. The method according to any one of claims 1 to 3,
wherein method step v) is performed concurrently or at least partly overlapping with method step iv).

5. The method according to any one of claims 1 to 4,
wherein the at least one pressure value determined in method step v) corresponds numerically to a differential pressure - relative to the ambient air pressure - being or having been set in the enclosed room (2) upon a continuous supply of gas at a constant flow rate (Q).

6. The method according to any one of claims 1 to 5,
wherein the at least one pressure value determined in method step v) is measured by means of a pressure measuring system, particularly a differential pressure measuring system (13).

7. The method according to claim 6,
wherein the at least one pressure value determined in method step v) is measured at a point in time at which the temporal change in pressure in the enclosed room (2) does not exceed a predefined or predefinable upper threshold upon a continuous supply of gas at a constant volumetric flow rate (Q) and/or when the variance between a given plurality of detected pressure values does not exceed a predefined or predefinable threshold.

8. The method according to any one of claims 1 to 7,
wherein the at least one pressure value determined in method step v) corresponds to a mean value of a plurality of pressures measured by a pressure measuring system, particularly a differential pressure measuring system (13).

9. The method according to any one of claims 6 to 8,
wherein it is further preferable for the temperature in the enclosed room (2) to be measured continuously or at predefined times and/or upon predefined events, and wherein the at least one pressure value from the pressure value(s) measured by the pressure measuring system, particularly a differential pressure measuring system (13), is determined in method step v) factoring in said measured temperature.

10. The method according to any one of claims 1 to 9,
wherein a warning is output when the comparison performed in method step vi) between the at least one pressure value determined in method step v) and the reference value indicates that the determined pressure value deviates from the reference value by more than a predefinable tolerance.

11. The method according to any one of claims 1 to 10,
wherein the total amount of gas introduced into the enclosed room (2) per unit of time in method step iv) is preferably measured continuously or at predefined times or upon predefined events by means of a volumetric flow measuring system (14).

12. The method according to any one of claims 1 to 11,
wherein the oxygen-reducing system (1) further comprises at least one controllably configured recirculation fan (9.1, 9.2) for the switchable and alternating supplying of spatial air from the enclosed room (2) or fresh air, and wherein to realize method step iii), the at least one recirculation fan (9.1, 9.2) is controlled such that fresh air is introduced into the enclosed room (2).

13. The method according to any one of claims 1 to 12,
wherein the oxygen-reducing system (1) further comprises a control unit, wherein the control unit is designed to regulate a nitrogen purity for the gas separation system (3; 3.1, 3.2) to a predefined or predefinable value during the realizing of method step iii) which corresponds to or is higher than the protected atmosphere's concentration.

14. An oxygen-reducing system (1) with which a predefinable oxygen content can be set and maintained in the spatial atmosphere of an enclosed room (2) which is reduced in comparison to the normal ambient air, wherein the oxygen-reducing system (1) comprises the following:
- a compressor system (4; 4.1, 4.2) for compressing an initial gas mixture containing at least nitrogen and oxygen;
- a gas separation system (3; 3.1, 3.2) downstream of the compressor system (4; 4.1, 4.2) for separating off at least a portion of the oxygen contained in the initial gas mixture and for providing a nitrogen-enriched gas at the outlet of the gas separation system (3; 3.1, 3.2), wherein the outlet of the gas separation system (3; 3.1, 3.2) is fluidly connected or connectable to the enclosed room (2); and
- a differential pressure measuring system (13) for determining a pressure set in the enclosed room (2) relative to an external pressure,
wherein a control device (50) is further provided,
**characterized in that**
the control system comprises a corresponding sequence control for implementing the method according to claim 1.

## Revendications

1. Procédé pour déterminer et/ou surveiller l'étanchéité à l'air d'un espace (2) fermé et équipé d'une installation de réduction d'oxygène (1), dans l'atmosphère duquel on peut ajuster et maintenir au moins une teneur en oxygène à définir de préférence préalablement et réduite par comparaison à l'air ambiant normal, l'installation de réduction d'oxygène (1) comprenant un système de compresseur (4 ; 4.1, 4.2) pour comprimer au moins un mélange gazeux initial contenant au moins de l'azote et de l'oxygène et un système séparateur de gaz (3 ; 3.1, 3.2) disposé en aval du système de compresseur (4 ; 4.1, 4.2) en vue de séparer au moins une partie de l'oxygène contenu dans le mélange gazeux initial et de fournir un gaz enrichi en azote à la sortie du système séparateur de gaz (3 ; 3.1, 3.2), qui peut être amené à l'espace fermé (2) pour ajuster et/ou maintenir une teneur en oxygène réduite,
le procédé comprenant les étapes suivantes :
i) on fournit de l'air frais depuis l'extérieur de l'espace fermé (2) à titre de mélange gazeux initial ;
ii) on comprime l'air frais fourni dans le système de compresseur (4 ; 4.1, 4.2) de l'installation de réduction d'oxygène (1) ;
iii) on amène l'air frais comprimé au système séparateur de gaz (3 ; 3.1, 3.2) de l'installation de réduction d'oxygène (1) et on sépare une partie au moins de l'oxygène, contenu dans l'air frais, dans le système séparateur de gaz (3 ; 3.1, 3.2), de sorte qu'à la sortie du système séparateur de gaz (3 ; 3.1, 3.2) on fournit un gaz enrichi en oxygène ;
iv) on introduit dans l'espace fermé (2) le gaz fourni à la sortie du système séparateur de gaz (3 ; 3.1, 3.2) et enrichi en oxygène ;
v) on détecte une pression qui règne dans l'espace fermé (2) ou qui s'établit dans l'espace fermé (2) par rapport à la pression d'air ambiant ;
**caractérisé par** les étapes suivantes :
vi) on compare au moins une valeur de pression différentielle détectée dans l'étape v) à une valeur de référence correspondante ; et
vii) on évalue le résultat de comparaison obtenu dans l'étape vi), et en fonction de la hauteur d'un écart entre la valeur de pression différentielle détectée et la valeur de référence correspondante, on donne un pronostic sur l'étanchéité à l'air de l'espace fermé (2) et/ou on effectue une surveillance de l'étanchéité à l'air de l'espace fermé (2).

2. Procédé selon la revendication 1,
dans lequel, dans l'étape iv), on introduit de l'air frais dans l'espace fermé (2), en supplément au gaz fourni à la sortie du système séparateur de gaz (3 ; 3.1, 3.2), de préférence au moyen d'un système à ventilateur d'air frais (15) faisant partie de l'installation de réduction d'oxygène (1) et/ou au moyen du système de compresseur (4 ; 4.1, 4.2) qui fait partie de l'installation de réduction d'oxygène (1).

3. Procédé selon l'une ou l'autre des revendications 1 ou 2,
dans lequel le gaz introduit au total dans l'espace fermé (2) dans l'étape iv) est introduit avec un débit constant, le débit relatif (Qrel) qui est un quotient du débit (Q) sur le produit du volume par le taux de renouvellement d'air prend de préférence une valeur comprise entre 0,2 et 0,9, de façon encore plus préférée une valeur comprise entre 0,34 et 0,67.

4. Procédé selon l'une des revendications 1 à 3,
dans lequel on effectue l'étape v) conjointement avec l'étape iv) au moins partiellement en chevauchement temporel avec ladite étape.

5. Procédé selon l'une des revendications 1 à 4,
dans lequel ladite au moins une valeur de pression détectée dans l'étape v) correspond en valeur à une pression différentielle qui s'établit ou s'est établie par rapport à la pression de l'air ambiant lors d'une amenée continue de gaz à débit constant (Q) vers l'espace fermé (2).

6. Procédé selon l'une des revendications 1 à 5,
dans lequel on saisit ladite au moins une valeur de pression détectée dans l'étape v) à l'aide d'un système de mesure de pression, en particulier à l'aide d'un système de mesure de pression différentielle (13).

7. Procédé selon la revendication 6,
dans lequel on saisit ladite au moins une valeur de pression détectée dans l'étape v) à un instant lorsque, avec une amenée continue de gaz à débit constant (Q), la modification temporelle de la pression dans l'espace fermé (2) ne dépasse pas une valeur seuil supérieure définie ou définissable auparavant et/ou lorsque, pour une multitude de valeurs de pression détectées, leur variance ne dépasse pas une valeur seuil définie ou définissable auparavant.

8. Procédé selon l'une des revendications 1 à 7,
dans lequel ladite au moins une valeur de pression détectée dans l'étape v) correspond à une valeur moyenne d'une multitude de pressions saisies à l'aide d'un système de mesure de pression, en particulier à l'aide d'un système de mesure de pression différentielle (13).

9. Procédé selon l'une des revendications 6 à 8,
dans lequel on mesure en outre de préférence en continu ou à des instants prédéfinis et/ou à des événements prédéfinis la température dans l'espace fermé (2), et dans l'étape v) on détecte à partir de la pression ou des pressions saisie(s) à l'aide du système de mesure de pression, en particulier à l'aide du système de mesure de pression différentielle (13), ladite au moins une valeur de pression en prenant en compte la température mesurée.

10. Procédé selon l'une des revendications 1 à 9,
dans lequel on émet un avertissement lorsque dans l'étape vi) la comparaison entre ladite au moins une valeur de pression détectée dans l'étape v) et la valeur de référence montre que la valeur de pression détectée diffère par rapport à la valeur de référence de plus d'une tolérance prédéfinie.

11. Procédé selon l'une des revendications 1 à 10,
dans lequel on saisit la quantité de gaz introduite au total par unité de temps dans l'espace fermé (2) dans l'étape iv) de préférence à l'aide d'un système de mesure de débit volumétrique (14) soit en continu soit à des instants et/ou à des événements définis ou définissables préalablement.

12. Procédé selon l'une des revendications 1 à 11,
dans lequel l'installation de réduction d'oxygène (1) comprend en outre au moins un ventilateur de recirculation (9.1, 9.2) réalisé de façon pilotable destiné à l'amenée commutable et sélectionnable d'air ambiant depuis l'espace fermé (2) ou de l'air frais, et pour effectuer l'étape iii) on pilote ledit au moins un ventilateur de recirculation (9.1, 9.2) de telle sorte que de l'air frais est introduit dans l'espace fermé (2).

13. Procédé selon l'une des revendications 1 à 12,
dans lequel l'installation de réduction d'oxygène (1) comprend en outre une unité de régulation, l'unité de régulation étant conçue pour réguler, pendant la mise en oeuvre de l'étape iii), une pureté de l'azote du système séparateur de gaz (3 ; 3.1, 3.2) à une valeur définie ou définissable préalablement qui correspond à une concentration de l'atmosphère de la zone de protection ou qui est supérieure à celle-ci.

14. Installation de réduction d'oxygène (1) dans laquelle, dans l'atmosphère d'un espace fermé (2), une teneur en oxygène prédéfinie et réduite par comparaison à l'air ambiant normal est ajustée et maintenue, l'installation de réduction d'oxygène (1) comprenant :
- un système de compresseur (4 ; 4.1, 4.2) pour comprimer un mélange gazeux initial contenant au moins de l'azote et de l'oxygène ;
- un système séparateur de gaz (3 ; 3.1, 3.2) disposé en aval du système de compresseur (4 ; 4.1, 4.2) en vue de séparer au moins une partie de l'oxygène contenu dans le mélange gazeux initial et de fournir un gaz enrichi en azote à la sortie du système séparateur de gaz (3 ; 3.1, 3.2), la sortie du système séparateur de gaz (3 ; 3.1, 3.2) étant reliée ou susceptible d'être reliée en termes d'écoulement à l'espace fermé (2) ; et
- un système de mesure de pression différentielle (13) pour détecter une pression s'établissant dans l'espace fermé (2) par rapport à une pression extérieure,
dans laquelle est en outre prévu un dispositif de commande (50),
**caractérisée en ce que** l'installation de commande comprend un dispositif de commande de déroulement pour mettre en oeuvre le procédé selon la revendication 1.
